# EUROPÄISCHE PATENTANMELDUNG

(11) **EP 2 053 212 A1**
(43) Veröffentlichungstag der Anmeldung: **29.04.2009**
(21) Anmeldenummer: 08166092.0
(22) Anmeldetag: 08.10.2008
(51) Int. Cl.: F01N 7/18, F16L 13/02, F16L 13/04, B23K 101/12

(54) **Blechbauteil, insbesondere einer Abgasanlage**

(30) Priorität: 25.10.2007 DE 102007050968
(71) Anmelder: J. Eberspächer GmbH & Co. KG, 73730 Esslingen (DE)
(72) Erfinder: Hildebrand, Joachim, 73773 Aichwald (DE)
(74) Vertreter: Bongen, Renaud & Partner

(57) **Zusammenfassung**

Die vorliegende Erfindung betrifft ein Blechbauteil (1), insbesondere einer Abgasanlage, mit einem aus wenigstens zwei Schalen (3, 4) bestehenden Körper (2), mit wenigstens einem Rohr (5), wobei zumindest zwei Schalen (3, 4) entlang aneinander anliegender Stoßkanten (8, 9) miteinander verbunden sind, wobei zumindest zwei Schalen (3, 4) einen rohrförmigen, am Rohr (5) außen anliegenden Anschlussbereich (10) bilden, in den sich die miteinander verbundenen Stoßkanten (8, 9) dieser Schalen (3, 4) hinein erstrecken, wobei das Rohr (5) mit einer Schweißnaht (11) mit diesen Schalen (3, 4) verbunden ist, die sich entlang eines bezüglich der Längsrichtung (13) des Rohrs (5) stirnseitigen, das Rohr (5) umschließenden Rands (12) der Schalen (3, 4) im Anschlussbereich (10) erstreckt

Um die Dauerfestigkeit des Blechbauteils (1) zu verbessern, sind die Schalen (3, 4) im Anschlussbereich (10) so gestaltet, dass sie darin über ein Längsende (14) der Stoßkanten (8, 9) in der Längsrichtung (13) des Rohrs (5) vorstehen und voneinander beabstandet sind.

## Beschreibung

Die vorliegende Erfindung betrifft ein Blechbauteil, insbesondere einer Abgasanlage.

Bei einer Vielzahl von Anwendungen kommen Blechbauteile zum Einsatz, die einen aus wenigstens zwei Schalen bestehenden Körper sowie zumindest ein Rohr aufweisen. Beispielsweise sind in Halbschalenbauweise gefertigte Gehäuse denkbar, aus denen ein Rohr herausgeführt ist. Die Halbschalen sind dann entlang aneinander anliegender Stoßkanten miteinander verbunden, beispielsweise durch eine Schweißnaht. Die Halbschalen können für den Anschluss des Rohrs einen rohrförmigen, am Rohr außen anliegenden Anschlussbereich bilden, in dem sich die miteinander verbundenen Stoßkanten der Halbschalen erstrecken. Das Rohr kann nun mit einer Schweißnaht mit den Halbschalen verbunden werden, wobei sich diese Schweißnaht entlang eines bezüglich der Längsrichtung des Rohrs stirnseitigen und das Rohr umschließenden Rands der Schalen im Anschlussbereich erstreckt. Üblicherweise verläuft dieser stirnseitige Rand auf dem kürzesten Weg um das Rohr herum und liegt somit regelmäßig in einer Ebene, die sich senkrecht zur Längsrichtung des Rohrs erstreckt. Bei einem kreisförmigen Querschnitt des Rohrs besitzt somit auch der stirnseitige Rand einen kreisförmigen Verlauf, so dass auch die Schweißnaht zwischen dem Rohr und den Halbschalen kreisförmig ist.

Es hat sich gezeigt, dass insbesondere bei Abgasanlagen im Betrieb von damit ausgestatteten Fahrzeugen hohe Belastungen auftreten, die zu einem Versagen der Schweißverbindung zwischen dem Rohr und dem Schalenkörper führen kann.

Die vorliegende Erfindung beschäftigt sich mit dem Problem, für ein Blechbauteil der eingangs genannten Art eine verbesserte Ausführungsform anzugeben, die sich insbesondere dadurch auszeichnet, dass sie eine erhöhte Lebensdauer besitzt.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die im Anschlussbereich am Rohr anliegenden Schalen in der Längsrichtung des Rohrs über ein Längsende der aneinander anliegenden Stoßkanten hinaus zu verlängern, und zwar so, dass die über das Längsende der Stoßkanten überstehenden Bereiche der Schalen voneinander beabstandet sind. Hierdurch ergibt sich in einer Seitenansicht ein keilförmiger oder talförmiger Verlauf für den stirnseitigen Rand, bei dem sich dieser stirnseitige Rand von einem vom Längsende der Stoßkanten entfernten Bereich der einen Schale entlang seines Verlaufs dem Längsende nähert und an der anderen Schale wieder vom Längsende entfernt. Durch die vorgeschlagene Ausgestaltung der Schalen im Anschlussbereich ergibt sich benachbart zum Längsende der Stoßkanten eine Verlängerung der Schweißnaht, was die Verbindungskräfte zwischen dem Rohr und den Schalen erhöht oder zumindest gleichmäßiger verteilt. Gleichzeitig werden dadurch Spannungsspitzen im Bereich des Längsendes der Stoßkanten reduziert, was die Gesamtbelastung der Schweißnaht im Bereich des Längsendes senkt. Dementsprechend wird die Dauerhaltbarkeit der Schweißverbindung zwischen Rohr und Schalenkörper erhöht.

Vorteilhaft ist eine Ausführungsform, bei welcher der stirnseitige Rand an den beiden Schalen zumindest in einem vom Längsende der Stoßkanten ausgehenden Abschnitt einen symmetrischen Verlauf aufweist. Durch die Symmetrie der Schweißnaht kann eine möglichst gleichmäßige Spannungsverteilung innerhalb der Schweißnaht bei Belastungen realisiert werden.

Gemäß einer anderen vorteilhaften Ausführungsform kann im Anschlussbereich der Abstand zwischen den beiden Schalen mit zunehmendem Abstand vom Längsende der Stoßkanten zunehmen. Hierdurch wird ein möglichst sanfter Übergang zwischen dem am Längsende der Stoßkanten vorbeigeführten Teil der Schweißnaht und den Teilen der Schweißnaht realisiert, die sich in den vom Längsende entfernten Abschnitten der Schalen befinden. Auch dies führt zur Vermeidung von Spannungsspitzen innerhalb der Schweißnaht.

Bei einer anderen vorteilhaften Ausführungsform kann vorgesehen sein, die beiden Schalen im Anschlussbereich so auszuformen, dass eine Tangente an den Verlauf des stirnseitigen Rands im Längsende der Stoßkanten senkrecht zur Längsrichtung der Stoßkanten verläuft. Durch diese Bauweise wird ebenfalls eine Reduzierung von Spannungsspitzen gerade im Bereich des Längsendes erzielt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,

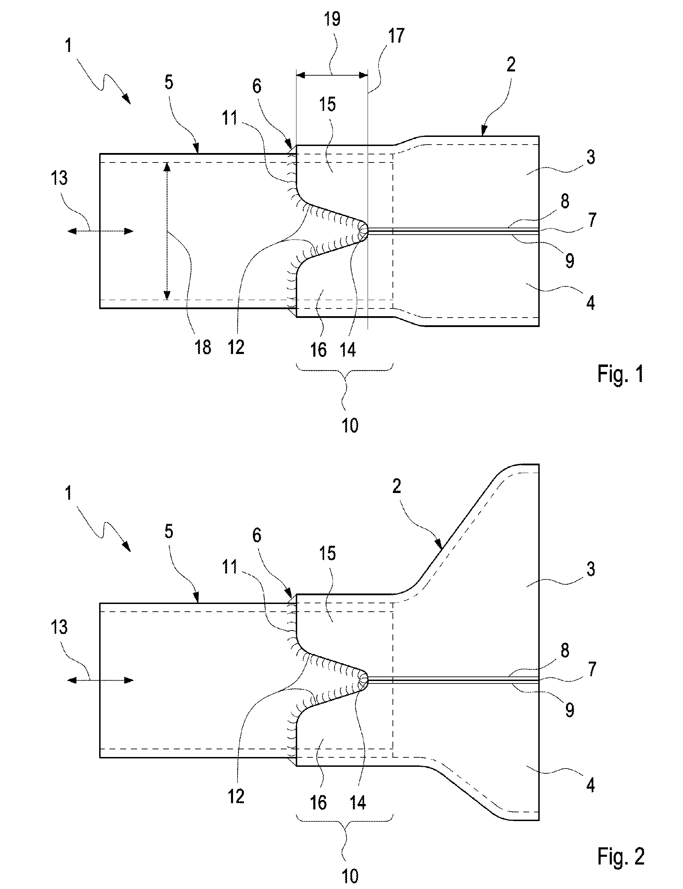

- Fig. 1 bis 5: jeweils eine stark vereinfachte Seitenansicht eines Blechbauteils im Bereich einer Schweiß- verbindung zwischen einem Rohr und einem Schalenkörper, bei verschiedenen Ausführungsformen.

Entsprechend den Fig. 1 bis 5 umfasst ein Blechbauteil 1, bei dem es sich bevorzugt um einen Bestandteil einer Abgasanlage handeln kann, einen Körper 2, der aus wenigstens zwei Schalen 3 und 4 besteht und im Folgenden auch als Schalenkörper 2 bezeichnet werden kann. Es ist klar, dass der Körper 2 auch aus mehr als zwei Schalen 3, 4 bestehen kann. Sofern nur zwei Schalen 3, 4 vorhanden sind, kann es sich um Halbschalen handeln, was jedoch nicht zwingend erforderlich ist. Insbesondere müssen die Schalen 3, 4 nicht baugleich sein. Die Schalen 3, 4 sind Blechformteile, also aus Metall. Ferner weist das Blechbauteil 1 zumindest ein Rohr 5 auf, das mittels einer Schweißverbindung 6 mit dem Schalenkörper 2 verbunden ist. Es ist klar, dass das Blechbauteil 1 grundsätzlich auch zwei oder mehr derartige Rohre 5 aufweisen kann, die über entsprechende Schweißverbindungen 6 mit dem Schalenkörper 2 verbunden sein können. Das Rohr 5 besteht auch aus Metall.

Die zwei gezeigten Schalen 3, 4 besitzen entlang einer Trennlinie 7 jeweils eine Stoßkante 8 beziehungsweise 9. Im zusammengebauten Zustand liegen die beiden Stoßkanten 8, 9 entlang der Trennlinie 7 aneinander an. Ferner sind die beiden Schalen 3, 4 entlang ihrer aneinander anliegenden Stoßkanten 8, 9 miteinander verbunden. Hierzu kann eine hier nicht näher bezeichnete Schweißnaht vorgesehen sein. Grundsätzlich können die Stoßkanten 8, 9 auch durch Bördelung miteinander verbunden sein.

Die beiden Schalen 3, 4 bilden einen rohrförmigen Anschlussbereich 10, der hier jeweils durch eine geschweifte Klammer symbolisiert ist. In diesem Anschlussbereich 10 liegen die Schalen 3, 4 am Rohr 5 außen flächig an. Die Stoßkanten 8, 9 erstrecken sich in diesen Anschlussbereich 10 hinein.

Das Rohr 5 ist über die Schweißverbindung 6 mit dem Schalenkörper 2 verbunden. Die Schweißverbindung 6 umfasst hierzu eine durchgehende Schweißnaht 11. Diese erstreckt sich im Anschlussbereich 10 entlang eines Rands 12 der Schalen 3, 4, der das Rohr 5 umschließt und der bezüglich einer Längsrichtung 13 des Rohrs 5 stirnseitig ausgebildet ist.

Die Trennlinie 7, entlang der die beiden Stoßkanten 8, 9 aneinander anliegen, definiert eine Längsrichtung der Stoßkanten 8, 9. Die Stoßkanten 8, 9 enden im Anschlussbereich 10 an einem Längsende 14. Erfindungsgemäß sind die beiden Schalen 3, 4 im Anschlussbereich 10 nun so gestaltet, dass sie jeweils über das Längsende 14 in der Längsrichtung 13 des Rohrs 5 vorstehen und voneinander beabstandet sind. Hierdurch erhält der stirnseitige Rand 12 den hier in der Seitenansicht erkennbaren wellenförmigen Verlauf, bei dem das Wellental das Längsende 14 der Stoßkanten 8, 9 berührt. Da sich die Schweißnaht 11 entlang des stirnseitigen Rands 12 erstreckt, folgt die Schweißnaht 11 diesem speziellen Verlauf des Rands 12. Durch diese Ausgestaltung der Schalen 3, 4 wird die Schweißnaht 11 länger als eine Schweißnaht, welche das Rohr 5 entlang einer senkrecht zur Längsrichtung 13 verlaufenden Ebene umschließt. Allein hierdurch kann bereits die Festigkeit der Schweißverbindung 6 erhöht werden. Die gezielt im Bereich des Längsendes 14 vorgenommene Formgebung der Schalen 3, 4 führt jedoch gleichzeitig zu einer signifikanten Entspannung der Schweißnaht 6 im Bereich des Längsendes 14, da durch diese Maßnahme die vom Rohr 5 auf die Schalen 3, 4 zu übertragenden Kräfte auf einen größeren Bereich verteilt werden. Hierdurch kann die Dauerbelastbarkeit der Schweißverbindung 6 erhöht werden.

Die über das Längsende 14 der Stoßkanten 8, 9 vorstehenden Abschnitte der Schalen 2, 3 werden im Folgenden auch als Fortsätze 15 beziehungsweise 16 bezeichnet.

Bei den gezeigten Beispielen besitzt der stirnseitige Rand 12 einen symmetrischen Verlauf. Insbesondere ist der Rand 12 und somit auch die Schweißnaht 11 bezüglich einer Ebene, in welcher die Trennlinie 7 zumindest im Anschlussbereich 10 liegt, spiegelsymmetrisch gestaltet.

Bemerkenswert ist bei den hier gezeigten Ausführungsformen außerdem, dass im Anschlussbereich 10 der Abstand zwischen den Fortsätzen 15, 16 mit zunehmendem Abstand vom Längsende 14 zunimmt. Hierdurch ergibt sich die hier in Richtung zum Längsende 14 verjüngende Keilform des zwischen den Fortsätzen 15, 16 ausgebildeten Freiraums. Hierdurch kann ein allmählicher Übergang im Verlauf des Rands 12 und somit der Schweißnaht 11 zwischen dem dem Längsende 14 zugeordneten Bereich und den davon beabstandeten Bereichen realisiert werden.

In Fig. 1 ist zusätzlich eine Tangente 17 eingetragen, die an den Verlauf des stirnseitigen Rands 12 gelegt ist und sich durch das Längsende 14 erstreckt. Diese Tangente 17 erstreckt sich dabei senkrecht zur Längsrichtung, welche die Stoßkanten 8, 9 zumindest im Anschlussbereich 10 aufweisen. Hierdurch können die Spannungen innerhalb der Schweißnaht 11 im Bereich des Längsendes 14 reduziert werden. Zu diesem Zweck können beispielsweise die beiden Schalen 3, 4 im Bereich ihrer Fortsätze 15, 16 so geformt sein, dass der Verlauf des Rands 12 im Bereich des Längsendes 14 einen Kreisbogenabschnitt aufweist. Der Radius dieses Kreisbogenabschnitts kann beispielsweise 10% eines Durchmessers 18 aufweisen, den das Rohr 5 zumindest im Anschlussbereich 10 besitzt. Rein exemplarisch und ohne Beschränkung der Allgemeinheit kann dieser Radius beispielsweise 5 mm aufweisen.

Der Rand 12 kann sich innerhalb der Fortsätze 15, 16 beispielsweise bis zu einem Abstand 19 vom Längsende 14 entfernen. Dieser Abstand 19 kann beispielsweise ein Drittel des Durchmessers 18 betragen.

Die Ausführungsformen der Fig. 1 und 2 unterscheiden sich lediglich durch die Gestaltung des Schalenkörpers 2. Fig. 1 zeigt eine Ausführungsform, bei welcher das Blechbauteil 1 beispielsweise eine Rohrzusammenführung oder eine Rohrverzweigung sein kann, die insbesondere nach Art einer Y-Hose oder nach einer X-Hose gestaltet sein kann. Im Unterschied dazu zeigt Fig. 2 eine Ausführungsform, bei der das Blechbauteil 1 ein Katalysator oder ein Partikelfilter oder ein Schalldämpfer sein kann. Darüber hinaus sind noch beliebig andere Ausgestaltungen für das Blechbauteil 1 denkbar, wie zum Beispiel Abgaskrümmer in Schalenbauweise und dergleichen, wobei Blechbauteile 1 nicht nur als Komponenten einer Abgasanlage in Frage kommen, sondern grundsätzlich auch beliebige andere Anwendungen denkbar sind.

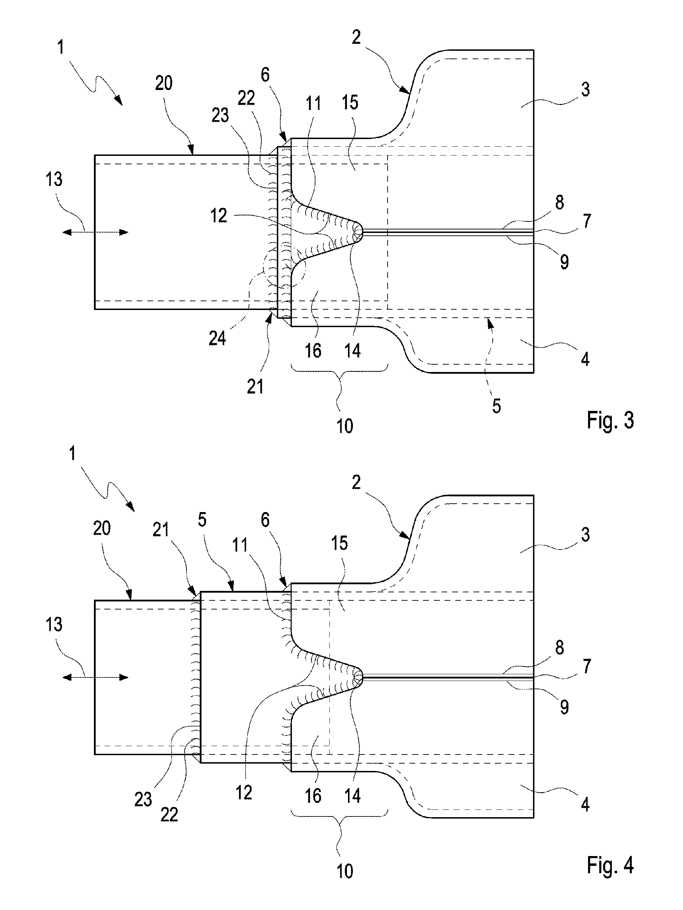

Bei den Ausführungsformen der Fig. 3 bis 5 ist in das Rohr 5 ein weiteres Rohr 20 eingesetzt, das über eine weitere Schweißverbindung 21 mit dem anderen Rohr 5 verbunden ist. Das außenliegende Rohr 5 wird im Folgenden auch als äußeres Rohr 5 bezeichnet, während das innenliegende Rohr 20 im Folgenden auch als inneres Rohr 20 bezeichnet wird. Die weitere Schweißverbindung 21, welche die beiden Rohre 5, 20 miteinander verbindet, umfasst eine umlaufende Schweißnaht 22, welche ein axiales Ende 23 des äußeren Rohrs 5 mit der Außenseite des inneren Rohrs 20 verbindet. Inneres Rohr 20 und äußeres Rohr 6 können auch vertauscht sein.

Bei der in Fig. 3 gezeigten Ausführungsform ragt das äußere Rohr 5 nur geringfügig über den stirnseitigen Rand 12 des Schalenkörpers 2 vor. Hierdurch ergibt sich die Möglichkeit, die beiden Schweißnähte 11 und 22 zumindest bereichsweise als Zwei-Blech-Naht auszuführen. Diese Zwei-Blech-Naht besitzt in einem markierten Bereich 24 außerdem eine Überlappung an dem Teil der Schweißnaht 11, der zum Längsende 14 hinführt und davon wieder zurückführt.

Bei der in Fig. 4 gezeigten Ausführungsform steht das äußere Rohr 5 vergleichsweise weit über den stirnseitigen Rand 12 des Schalenkörpers 2 vor, wodurch die beiden Schweißnähte 11, 22 vollständig separat ausgebildet werden können.

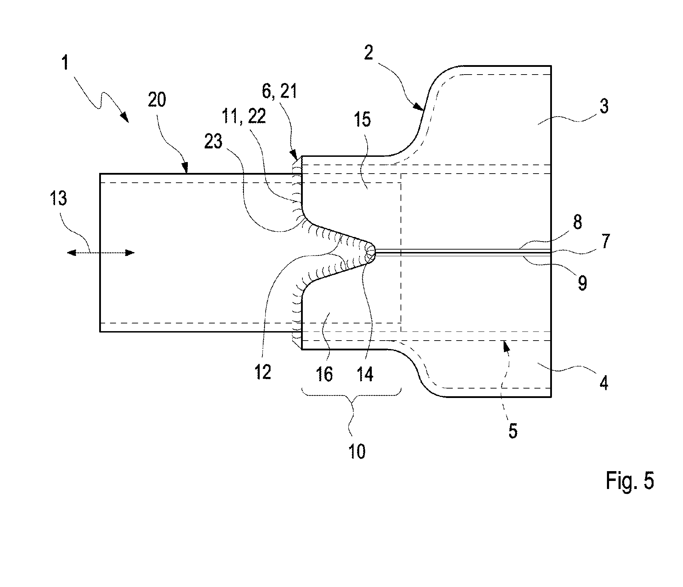

Bei der in Fig. 5 gezeigten Ausführungsform besitzt das axiale Ende 23 des äußeren Rohrs 5 zweckmäßig den gleichen Verlauf wie der stirnseitige Rand 12 des Schalenkörpers 2. Dies eröffnet die Möglichkeit, das innere Rohr 20, das äußere Rohr 5 und den Schalenkörper 2 mit einer gemeinsamen Drei-Blech-Naht miteinander zu verschweißen. Die einzelnen Schweißnähte 11, 22 fallen damit zusammen, ebenso wie die Schweißverbindungen 6, 21. In der in Fig. 5 erkennbaren Seitenansicht ist das axiale Ende 23 des äußeren Rohrs 5 deckungsgleich zu den Fortsätzen 15, 16 des Schalenkörpers 2 gestaltet.

## Patentansprüche

1. Blechbauteil, insbesondere einer Abgasanlage,
- mit einem aus wenigstens zwei Schalen (3, 4) bestehenden Körper (2),
- mit wenigstens einem Rohr (5),
- wobei zumindest zwei Schalen (3, 4) entlang aneinander anliegender Stoßkanten (8, 9) miteinander verbunden sind,
- wobei zumindest zwei Schalen (3, 4) einen rohrförmigen, am Rohr (5) außen anliegenden Anschlussbereich (10) bilden, in den sich die miteinander verbundenen Stoßkanten (8, 9) dieser Schalen (3, 4) hinein erstrecken,
- wobei das Rohr (5) mit einer Schweißnaht (11) mit diesen Schalen (3, 4) verbunden ist, die sich entlang eines bezüglich der Längsrichtung (13) des Rohrs (5) stirnseitigen, das Rohr (5) umschließenden Rands (12) der Schalen (3, 4) im Anschlussbereich (10) erstreckt,
- wobei die beiden Schalen (3, 4) im Anschlussbereich (10) über ein Längsende (14) der Stoßkanten (8, 9) in der Längsrichtung (13) des Rohrs (5) vorstehen und voneinander beabstandet sind.

2. Blechbauteil nach Anspruch 1,
**dadurch gekennzeichnet,**
**dass** der stirnseitige Rand (12) an den beiden Schalen (4, 5) zumindest in einen vom Längsende (14) der Stoßkanten (8, 9) ausgehenden Abschnitt einen symmetrischen Verlauf aufweist.

3. Blechbauteil nach Anspruch 1 oder 2,
**dadurch gekennzeichnet,**
**dass** im Anschlussbereich (10) der Abstand zwischen den beiden Schalen (3, 4) mit zunehmendem Abstand vom Längsende (14) der Stoßkanten (8, 9) zunimmt.

4. Blechbauteil nach einem der Ansprüche 1 bis 3,
**dadurch gekennzeichnet,**
**dass** die beiden Schalen (3, 4) im Anschlussbereich (10) so geformt sind, dass eine Tangente (17) an den Verlauf des stirnseitigen Rands (12) im Längsende (14) der Stoßkanten (8, 9) senkrecht zur Längsrichtung der Stoßkanten (8, 9) verläuft.

5. Blechbauteil nach einem der Ansprüche 1 bis 4,
**dadurch gekennzeichnet,**
**dass** die beiden Schalen (3, 4) im Anschlussbereich (10) so geformt sind, dass der Verlauf des stirnseitigen Rands (12) im Bereich des Längsendes (14) der Stoßkanten (8, 9) einen Kreisbogenabschnitt aufweist.

6. Blechbauteil nach einem der Ansprüche 1 bis 5,
**dadurch gekennzeichnet,**
**dass** die beiden Schalen (3, 4) im Anschlussbereich (10) etwa ein Drittel eines Durchmessers (18) des Rohrs (5) über das Längsende (14) der Stoßkanten (8, 9) vorstehen.

7. Blechbauteil nach einem der Ansprüche 1 bis 6,
**dadurch gekennzeichnet,**
**dass** in das Rohr (5) ein anderes Rohr (20) eingesetzt ist, das über eine umlaufende Schweißnaht (22) mit einem axialen Ende (23) des äußeren Rohrs (5) verbunden ist.

8. Blechbauteil nach Anspruch 7,
**dadurch gekennzeichnet,**
**dass** das axiale Ende (23) des äußeren Rohrs (5) gleichlaufend zum Verlauf des stirnseitigen Rands (12) der Schalen (3, 4) geformt ist.

9. Blechbauteil nach Anspruch 7 oder 8,
**dadurch gekennzeichnet,**
**dass** die Schweißnaht (22) zum Verbinden des inneren Rohrs (20) mit dem äußeren Rohr (5) und die Schweißnaht (11) zum Verbinden des äußeren Rohrs (5) mit den beiden Schalen (3, 4) als Zwei-Blech-Naht oder als Drei-Blech-Naht ausgestaltet ist.

10. Blechbauteil nach einem der Ansprüche 1 bis 9,
**dadurch gekennzeichnet,**
**dass** das Blechbauteil (1) ein Schalenkrümmer, ein Katalysator, ein Partikelfilter, ein Schalldämpfer, eine Rohrzusammenführung oder eine Rohrverzweigung ist.
